Europäisches Patentamt

(19) European Patent Office

Office européen des brevets

(11) **EP 0 591 002 B1**

(12) **EUROPEAN PATENT SPECIFICATION**

(45) Date of publication and mention
of the grant of the patent:
**02.07.1997 Bulletin 1997/27**

(51) Int. Cl.$^6$: **B60C 11/00**

(21) Application number: **93307823.0**

(22) Date of filing: **01.10.1993**

(54) **Pneumatic tires**

Luftreifen

Bandage Pneumatique

(84) Designated Contracting States:
**DE ES FR GB IT**

(30) Priority: **02.10.1992 JP 264816/92**

(43) Date of publication of application:
**06.04.1994 Bulletin 1994/14**

(60) Divisional application: **95114790.9**
**95114789.1**

(73) Proprietor: **BRIDGESTONE CORPORATION**
**Tokyo 104 (JP)**

(72) Inventors:
• **Tani, Katsutoshi**
**Kodaira City, Tokyo (JP)**

• **Yonezawa, Takeshi**
**Tokorozawa City, Saitama Pref. (JP)**
• **Ando, Toshiaki**
**Kodaira City, Tokyo (JP)**

(74) Representative: **Whalley, Kevin et al**
**MARKS & CLERK,**
**57-60 Lincoln's Inn Fields**
**London WC2A 3LS (GB)**

(56) References cited:
EP-A- 0 118 059      EP-A- 0 367 557
EP-A- 0 422 571      EP-A- 0 495 619

• **PATENT ABSTRACTS OF JAPAN vol. 14, no. 147
(M-952)(4090) 20 March 1990 & JP-A-02 011 404
(YOKOHAMA)**

## Description

This invention relates to pneumatic tires, and more particularly to a pneumatic radial tire having an improved uniformity and usable for passenger cars as well as small-size trucks, trucks and buses running on good roads.

In pneumatic radial tires for passenger cars, a tread pattern is generally formed by properly combining various kinds of pitch segments having different pitch lengths along the circumference of the tire for reducing various noises based on the tire tread pattern.

In this connection, there have widely been attempted various methods such as a method wherein a ratio of opening width in lateral grooves included in each pitch segment and having an extending component in the widthwise direction of the tread is selected so as to become equal to the pitch ratio when the angle of a groove wall with respect to a surface of a land portion and the groove depth are constant, and a method wherein the angle of a lateral groove wall is selected in such a manner that the volume ratio of the lateral groove having a constant groove depth is equal to the pitch ratio.

In the former technique wherein the ratio of opening width in each lateral groove is made equal to the pitch ratio, the thickness of the tread becomes thicker as the pitch length becomes long, so that the difference in compression modulus of elasticity between the pitch segments becomes considerably larger due to the difference of tread thickness in the pitch segments in addition to the difference in the rigidity between the pitch segment having a long pitch length and the pitch segment having a short pitch length and hence the tire uniformity, particularly higher component in radial force variation (hereinafter referred to as RFV), is degraded to largely cause undesired uneven wear of the tire. In the latter technique wherein the volume ratio in the lateral grooves is made equal to the pitch ratio, the tread thickness and hence the distance from the carcass to the land surface becomes equal independently of the pitch length, but the difference in the pattern rigidity between the pitch segment having a long pitch length and the pitch segment having a short pitch length still remains, so that RFV cannot effectively be controlled and the occurrence of uneven wear cannot sufficiently be prevented.

In connection with such prior art, attention is in particular drawn to the disclosure of EP-A-0495619.

It is, therefore, an aim of the present invention to overcome the aforementioned drawbacks of the above conventional techniques and to provide a pneumatic tire having considerably improved tire uniformity for RFV by off-setting the difference in rigidity between pitch segments due to the difference in pitch length with the difference in thickness between tread portions.

According to the invention, there is provided a pneumatic tire having a tread pattern formed by arranging lateral grooves having a widthwise extending component in a ground contact portion of a tread and combining at least two kinds of pitch segments having different pitch lengths in the circumferential direction of the tread, in which a negative ratio (circumferential length of the groove to circumferential length of the pitch segment) in each pitch segment is 25-55%, characterized in that a distance from the center of the tire to a surface of a land portion at a tire section in the circumferential direction under normal inflation air pressure is made longer in a pitch segment having a shorter pitch length as compared with a pitch segment having a longer pitch length.

In this case, the optimum value of the difference in the distance from the tire center to the land surface between the pitch segments is dependent upon the pitch ratio, pitch length, hardness of tread rubber, groove depth and the like, so that it is necessary to determine the optimum value in accordance with these factors. In general, the difference between these distances is within $\pm 0.1$ mm with respect to a distance to middle pitch segment as a standard in the case of passenger car tires and not less than +0.2 mm but not more than -0.2 mm in the case of radial tires for off-the-road four-wheeled driven vehicles.

In a preferred pneumatic tire according to the invention, the negative ratio in each pitch segment is constant and the distance from the outermost belt layer to the land surface is longer in the pitch segment having a shorter pitch length.

Further, a sum of transverse sectional areas of vent-spews remaining in the land portion is preferably larger in the pitch segment having a longer pitch length.

The invention will be further described, by way of example only, with reference to the accompanying drawings, wherein:

Fig. 1 is a schematic sectional view of an embodiment of the tread portion of a tire according to the invention in the circumferential direction of the tread;

Fig. 2 is a schematically sectional view of a conventional tread portion in the circumferential direction of the tread;

Fig. 3 is a schematic view of a preferred embodiment of a tread structure;

Fig. 4 is a developed view of an embodiment of vent-spew formation;

Fig. 5 is a graph showing another high waveforms of RFV in the tire according to Fig. 4 and a conventional tire;

Fig. 6 is a diagrammatical view of tread patterns applicable to the invention;

Fig. 7 is a diagrammatical view of tread patterns not applicable to the invention; and

Fig. 8 is a diagrammatical view of another tread pattern applicable to the invention.

The tread rubber located as the outermost layer of the tire is generally formed by using a rubber sheet cut into a proper length after being continuously extruded through a extruder, so that the thickness of the green tread rubber used per each tire becomes substantially uniform over the full circumference of the tire.

In the tread rubber, lateral grooves are formed in such a manner that the ratio of groove width is equal to the pitch ratio or the ratio of groove volume is equal to the pitch ratio even in any groove portions in the depthwise direction of the lateral groove, whereby it is made possible to maintain the tread thickness in the tire product constant irrespective of the short or long pitch length.

Even in this case, however, the difference in rigidity between pitch segments due to the short or long pitch length still remains as mentioned above, so that it is impossible to effectively control RFV.

Therefore, the opening width of the lateral groove is narrowed to reduce the thickness of the tread rubber in the pitch segment having a long pitch length, while the opening width of the lateral groove is widened to thicken the thickness of the tread rubber in the pitch segment having a short pitch length as compared with the case that the ratio of opening width in the lateral groove is set to be equal to the pitch ratio, whereby the distance from the center of the tire to the land surface under an inflation pressure is made short in the pitch segment having a long pitch length, which is properly combined with the rigidity element and radial run-out (hereinafter referred to as RRO), and hence RFV produced due to the difference in rigidity between pitch segments can effectively be off-set by the difference in tread rubber thickness to sufficiently make RFV waveform uniform over the full circumference of the tire.

In the invention, the reason why the negative ratio in each pitch segment is limited to a range of 25-55% is due to the fact that when it is less than 25%, the groove width is generally narrow and the angle of the groove wall with respect to the land surface is small, while the tread volume is large, so that the ratio of the difference in groove volume contributing to variation of tread gauge becomes very small. On the other hand, when it exceeds 55%, the running performance on good roads or paved roads can not be attained.

When the negative ratio in each pitch segment is constant and the distance from the center of the tire to the land surface is long in the pitch segment having a short pitch length, or when the thickness of the tread rubber itself is thicker in the pitch segment having a short pitch length, RRO is caused. However, when it is properly combined with the rigidity between pitch segments, RFV produced due to the rigidity between pitch segments can effectively be off-set by the difference in tread rubber thickness to sufficiently uniformize RFV over the full circumference of the tire.

Furthermore, when the sum of transverse sectional areas of vent-spews remaining in the land portion in a direction perpendicular to a lengthwise direction of the vent-spew is made large in the pitch segment having a longer pitch length to increase the distance from the center of the tire to the land surface under inflation air pressure in the pitch segment having a short pitch length, RFV can sufficiently be uniformized over the full circumference of the tire likewise the above case.

Moreover, the tread rubber thickness adjusted by the vent-spew is typically represented by the following formula:

$$\text{tread rubber thickness} = (\pi/4)A^2 \cdot N \cdot L/S \propto A^2 \cdot N \cdot L/S$$

(wherein S is surface area of a land portion, A is diameter of a vent-spew, N is number of vent-spews and L is length of a vent-spew), from which it is understood that the tread rubber thickness can easily be controlled by selecting the vent-spew diameter A and vent-spew number N with respect to the land surface area S.

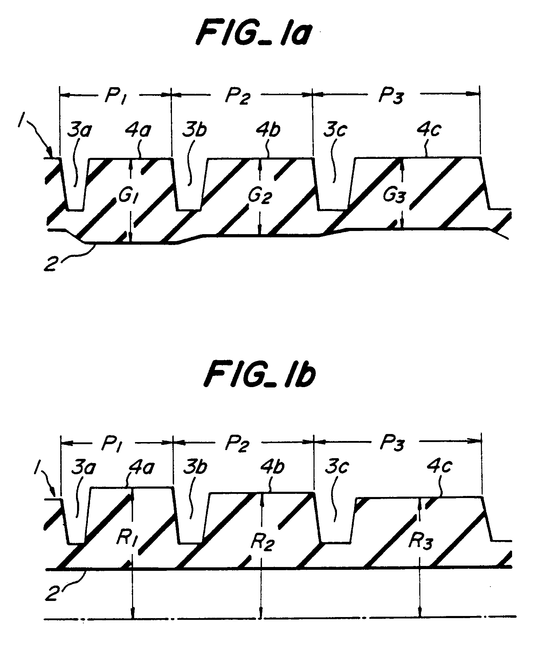

In Fig. 1 is partly shown a schematically developed sectional view of a tread portion of a pneumatic tire according to the invention taken along the circumferential direction of the tire, in which numeral 1 is a tread portion and numeral 2 an outermost belt layer.

The tread pattern of this tire is formed by combining three kinds of pitch segments $P_1$, $P_2$ and $P_3$ having different pitch lengths in the circumferential direction of the tread in which the pitch lengths of these pitch segments are $P_1 < P_2 < P_3$. In the pitch segments, land portions 4a, 4b, 4c are defined by lateral grooves 3a, 3b, 3c each having a component extending in a widthwise direction of the tread. Further, a relationship among distance $G_1$ from the outermost belt layer 2 to the land surface in the land portion 4a having the shortest pitch length, distance $G_2$ from the outermost belt layer 2 to the land surface in the land portion 4b having a shorter pitch length and distance $G_3$ from the outermost belt layer 2 to the land surface in the land portion 4c having the longest pitch length is $G_1 > G_2 > G_3$ and the negative ratio in each of the pitch segments $P_1$, $P_2$ and $P_3$ is 38%.

In the vulcanization of the tire having the tread portion 1 of the above structure, the outermost belt layer 2 has unevenness in the radial direction of the tire as shown in Fig. 1a, so that the surfaces of the land portions 4a, 4b, 4c locate on an arc having substantially the same radius of curvature. However, when the belt and hence the outermost layer is expanded in the form of a circle at a section in the circumferential direction of the tread under inflation air pressure as shown in Fig. 1b, the distances from the center of the tire to the land surfaces, i.e. radii up to the land surface $R_1$, $R_2$ and $R_3$ have a relationship of $R_1 > R_2 > R_3$ based on the difference among the distances $G_1$, $G_2$ and $G_3$.

As previously mentioned, the optimum values of these radii $R_1$, $R_2$ and $R_3$ are determined in accordance with the pitch ratio, pitch length and the like.

Thus, a slight amount of RRO is caused in the tire based on the design of the vulcanization mold, but it can properly be combined with rigidity element between pitch segments to effectively control RFV.

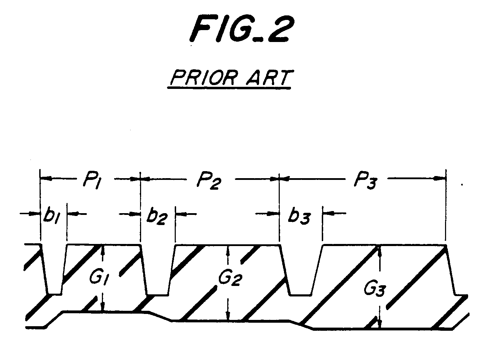

In the conventional technique in which the ratio of groove opening width is equal to the pitch ratio, the distances from the outermost belly layer to the land surface $G_1$, $G_2$, $G_3$ are $G_3>G_2>G_1$ as shown in Fig. 2 following Fig. 1. As to the tire uniformity, particularly RFV, the difference in these distances undesirably promotes the degradation of RFV originally resulted from the difference in rigidity between pitch segments as previously mentioned.

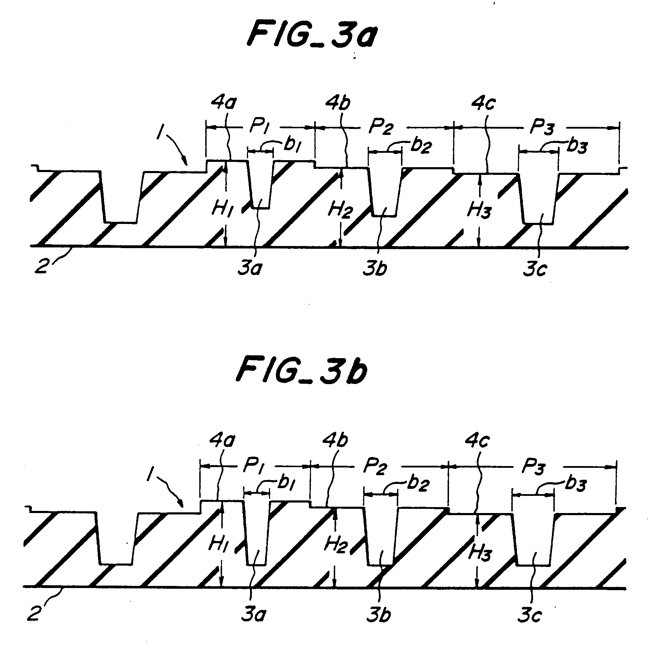

In Fig. 3 is shown a preferred embodiment of the tread structure sectionally shown in the circumferential direction of the tread, in which the negative ratio in each pitch segment is constant within a range of 25-55%, while distances $H_1$, $H_2$, $H_3$ from the outermost belt layer 2 to land surfaces 4a, 4b, 4c are made longer as the pitch length becomes shorter.

The depths of the lateral grooves 3a, 3b, 3c are the same as shown in Fig. 3a or the bottom positions of these grooves are the same as shown in Fig. 3b. In the former case, the groove width is made narrower and the radius of the groove bottom is made smaller as the pitch length becomes shorter, which are disadvantageous in respect of the resistance to cracking in the groove bottom, but the tread rubber gauge at the groove bottom becomes thicker, which is advantageous in respect of the resistance to groove bottom cracking. The latter case can delay the wearing because a pitch segment having a shorter pitch length and a weak block rigidity generally tends to promote wearing.

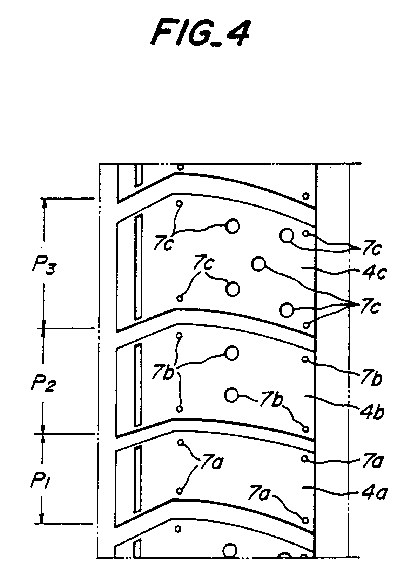

In Fig. 4 is shown a further preferred embodiment of the tread structure being a developed view of the tread pattern in the circumferential direction of the tread. A sum of transverse sectional areas of at least one vent-spew 7a, 7b or 7c taken in a direction perpendicular to a lengthwise direction of the vent-spew, which is formed on each of land portions 4a, 4b, 4c in pitch segments, is made larger as the pitch length becomes longer, whereby the thickness of the land portion as shown in Fig. 1 or 3 is realized in each pitch segment.

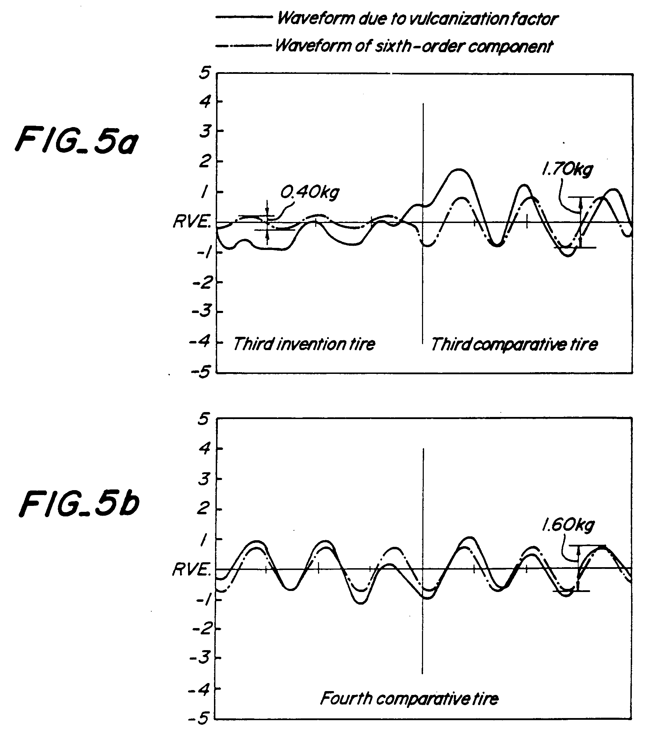

According to the embodiment of Fig.4, there are manufactured a third invention tire and third and fourth comparative tires each having a tire size of 255/40 ZR 17. In the third invention tire, the pitch ratio of the pitch segments is 7:9:11 and the ratio of the sum of transverse sectional areas in the vent-spews 7a, 7b, 7c is 100:240:450. The third comparative tire is the same as the third invention tire except that the ratio of the sum of spew sectional areas is 1:1:1, while the fourth comparative tire has no vent-spews. Fig. 5 shows average sixth-order component of RFV. As seen from the graphs in Fig 5, the peak-to-peak value of RFV is 1.70kg in the third comparative tire, 1.60 kg in the fourth comparative tire and 0.40 kg in the third invention tire, respectively.

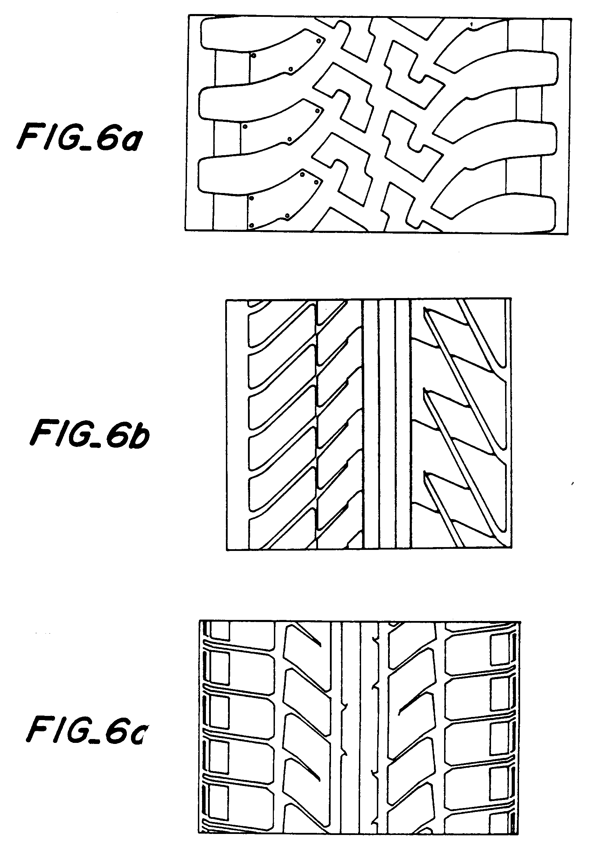

Although the invention has been described with respect to the illustrated embodiments, it is naturally applicable to tread patterns in which the lateral groove is provided with a component extending in the widthwise direction of the tread as shown in Figs. 6a, 6b and 6c.

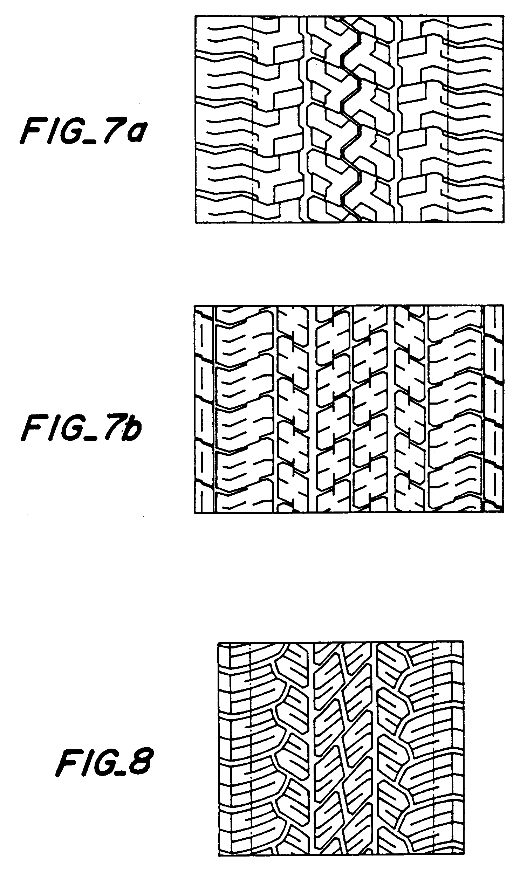

On the other hand, the invention is not applied to tread patterns in which the component extending in the widthwise direction of the tread is relatively small in the circumferential zigzag groove as shown in Figs. 7a and 7b, while it may be applied to a tread pattern in which the component extending in the widthwise direction of the tread is relatively large in the circumferential zigzag groove as shown in Fig. 8.

As mentioned above, according to the invention, RFV produced due to the difference in rigidity between pitch segments, particularly higher component thereof, can be off-set by the difference in tread rubber thickness formed by properly combining rigidity elements resulting from the pitch ratio of pitch segments with RRO inherent to the invention to sufficiently uniformize RFV waveform over the full circumference of the tire.

Also, when the distance from the tire center to the land surface is made longer as the pitch length in the pitch segment becomes shorter, RRO is caused, which can properly be combined with the rigidity between the pitch segments to produce the difference in tread rubber thickness for effectively off-setting RFV produced due to the difference in rigidity between pitch segments to sufficiently uniformize RFV waveform over the full circumference of the tire.

Moreover, when the sum of transverse sectional areas of vent-spews is made large as the pitch length in the pitch segment becomes long, RFV can sufficiently be uniformized over the full circumference of the tire likewise the above cases.

## Claims

1. A pneumatic tire having a tread pattern formed by arranging lateral grooves (3a, 3b, 3c) having a widthwise extending component in a ground contact portion of a tread and combining at least two kinds of pitch segments having different pitch lengths ($P_1$, $P_2$, $P_3$) in the circumferential direction of the tread, in which a negative ratio (circumferential length of the groove to circumferential length of the pitch segment) in each pitch segment is 25-55%, characterized in that a distance (R) from the center of the tire to a surface of a land portion (4) at a tire section in the circumferential direction under normal inflation pressure is made longer in a pitch segment having a shorter pitch length as compared with a pitch segment having a longer pitch length.

2. A pneumatic tire as claimed in claim 1, characterized in that the negative ratio in each pitch segment is constant and the distance ($H_1$, $H_2$, $H_3$) from the outermost belt layer (2) to the land surface is longer in the pitch segment having a shorter pitch length.

EP 0 591 002 B1

3. A pneumatic tire as claimed in claim 1 or 2, characterized in that a sum of transverse sectional areas of one or more vent-spews (7a, 7b, 7c) remaining in the land portions (4a, 4b, 4c) is larger in the pitch segment having a longer pitch length.

## Patentansprüche

1. Luftreifen, der ein Reifenprofil aufweist, das gebildet wird durch: Anordnen von seitlichen Rillen (3a, 3b, 3c), von denen sich ein in der Breitenrichtung erstreckender Teil in einem Bodenberührungsabschnitt eines Reifenprofils befindet, und Kombinieren von mindestens zwei Arten von Teilungssegmenten mit verschiedenen Teilungslängen ($P_1$, $P_2$, $P_3$) in der Umfangsrichtung des Reifenprofils, wobei ein negatives Verhältnis (Umfangslänge der Rille zur Umfangslänge des Teilungssegmentes) in jedem Teilungssegment 25-55% beträgt, dadurch gekennzeichnet, daß ein Abstand (R) von der Mitte des Reifens bis zu einer Oberfläche eines hervorstehenden Abschnittes (4) bei einem Reifenschnitt in der Umfangsrichtung unter dem normalen Reifenfülldruck in einem Teilungssegment länger ist, das eine kürzere Teilungslänge aufweist, wenn man mit einem Teilungssegment vergleicht, das eine größere Teilungslänge aufweist.

2. Luftreifen nach Anspruch 1, dadurch gekennzeichnet, daß das negative Verhältnis in jedem Teilungssegment konstant ist, und daß der Abstand ($H_1$, $H_2$, $H_3$) von der äußersten Gürtellage (2) bis zur hervorstehenden Oberfläche in dem Teilungssegment größer ist, das eine kürzere Teilungslänge aufweist.

3. Luftreifen nach Anspruch 1 oder 2, dadurch gekennzeichnet, daß eine Summe der Querschnittflächen eines oder mehrerer Entlüftungsgrate (7a, 7b, 7c), die in den hervorstehenden Abschnitten (4a, 4b, 4c) verbleiben, in dem Teilungssegment größer ist, das eine größere Teilungslänge aufweist.

## Revendications

1. Bandage pneumatique comportant une sculpture de bande de roulement formée par l'agencement de rainures latérales (3a, 3b, 3c) comportant une composante s'étendant dans le sens de la largeur dans une partie de contact au sol d'une bande de roulement, et la combinaison d'au moins deux types de segments de pas, ayant des longueurs de pas différentes ($P_1$, $P_2$, $P_3$) dans la direction circonférentielle de la bande de roulement, le rapport négatif (longueur circonférentielle de la rainure par rapport à la longueur circonférentielle du segment de pas) dans chaque segment de pas étant compris entre 25 et 55%, caractérisé en ce qu'une distance (R) entre le centre du pneumatique et une surface d'une partie d'appui (4) d'une section du pneumatique dans la direction circonférentielle, en cas d'un gonflement à une pression d'air normale, est accrue dans un segment de pas ayant une longueur de pas réduite, par rapport à celle d'un segment de pas ayant une longueur de pas plus grande.

2. Bandage pneumatique selon la revendication 1, caractérisé en ce que le rapport négatif dans chaque segment de pas est constant, la distance ($H_1$, $H_2$, $H_3$) entre la couche de ceinture la plus externe (2) et la surface d'appui étant plus grande dans le segment de pas ayant une longueur de pas réduite.

3. Bandage pneumatique selon les revendications 1 ou 2, caractérisé en ce qu'une somme des sections transversales d'une ou de plusieurs gorges de ventilation (7a, 7b, 7c) restant dans les parties d'appui (4a, 4b, 4c) est plus grande dans le segment de pas ayant une longueur de pas plus grande.

## FIG_ 1a

## FIG_ 1b

# FIG. 2

## PRIOR ART

# FIG_3a

# FIG_3b

# FIG_4

——— Waveform due to vulcanization factor
—·——— Waveform of sixth-order component

FIG.5a

FIG.5b

FIG_6a

FIG_6b

FIG_6c

FIG_7a

FIG_7b

FIG_8